(19) Europäisches Patentamt / European Patent Office / Office européen des brevets

(11) **EP 4 749 714 A1**

(12) # EUROPEAN PATENT APPLICATION
published in accordance with Art. 153(4) EPC

(43) Date of publication:
**27.05.2026  Bulletin 2026/22**

(21) Application number: **25748997.1**

(22) Date of filing: **24.01.2025**

(51) International Patent Classification (IPC):
**H01M 4/38** (2006.01)      **H01M 4/48** (2010.01)
**H01M 4/134** (2010.01)      **H01M 4/62** (2006.01)
**H01M 10/052** (2010.01)      **C01B 33/113** (2006.01)
**C01B 33/18** (2006.01)

(52) Cooperative Patent Classification (CPC):
**H01M 4/0483; H01M 4/134; H01M 4/386;**
**H01M 10/052;** H01M 2004/021; H01M 2004/027;
Y02E 60/10

(86) International application number:
**PCT/KR2025/001407**

(87) International publication number:
**WO 2025/165093 (07.08.2025 Gazette 2025/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **02.02.2024  KR 20240016628**

(71) Applicant: **LG Energy Solution, Ltd.
Seoul 07335 (KR)**

(72) Inventors:
• **KIM, Dohyeun**
  **Daejeon 34122 (KR)**
• **KIM, Donghyuk**
  **Daejeon 34122 (KR)**
• **LEE, Yong Ju**
  **Daejeon 34122 (KR)**
• **HYUN, Jaeik**
  **Daejeon 34122 (KR)**

(74) Representative: **Hoffmann Eitle
Patent- und Rechtsanwälte PartmbB
Arabellastraße 30
81925 München (DE)**

(54) **ANODE ACTIVE MATERIAL, METHOD FOR PREPARING SAME, ANODE COMPOSITION, ANODE FOR LITHIUM SECONDARY BATTERY COMPRISING SAME, AND LITHIUM SECONDARY BATTERY COMPRISING ANODE**

(57)  A negative electrode active material includes a silicon-based active material having a crystal grain size of about 300 nm or less. The silicon-based active material has a value of about 2.00 or less as defined by Equation 1 below. The silicon-based active material includes $SiO_x$ (x=0) and at least one selected from $SiO_x$ (0<x<2), and includes about 70 parts by weight or more of the $SiO_x$ (x=0) based on 100 parts by weight of the silicon-based active material.

[Equation 1]

$$(D90-D10)/D50$$

In Equation 1, D90, D10, and D50 represent diameters of particles corresponding to 90%, 10%, and 50% by volume in a size distribution, respectively.

**FIG. 1**

## EP 4 749 714 A1

**Description**

CROSS-REFERENCE TO RELATED APPLICATIONS

This application is based on and claims priority from Korean Patent Application No. 10-2024-0016628 filed on February 2, 2024, with the Korean Intellectual Property Office, the disclosure of which is incorporated herein in its entirety by reference.

TECHNICAL FIELD

The present disclosure relates to a negative electrode active material, a method of preparing a negative electrode active material, a negative electrode composition, a negative electrode for a lithium secondary battery including the same, and a lithium secondary battery including the negative electrode.

BACKGROUND

Due to the rapid increase in fossil fuel use, the demand for alternative or clean energy is increasing, and one of the most active areas of research is power generation and storage using electrochemical reactions.

A representative example of an electrochemical device that utilizes such electrochemical energy is a secondary battery, which is finding more and more applications. For example, as the technology development and demand for mobile devices increase, the demand for secondary batteries as an energy source is rapidly increasing. Among the secondary batteries, lithium secondary batteries, which have high energy density and voltage, relatively long cycle life, and low self-discharge rate, have been commercialized and are widely being used. In addition, research is actively being conducted on methods for manufacturing high-density electrodes with higher energy density per unit volume as electrodes for such high-capacity lithium secondary batteries.

SUMMARY

Unlike the spherical silicon particles formed by melting and gas atomizing existing silicon raw materials, the inventors of the present application found out that when the cooling rate is increased through a low-temperature sonicated substrate, the growth of crystal grains may be reduced, and accordingly, the produced silicon-based active material may have a relatively small crystal grain size and a uniform particle size distribution.

The present disclosure provides a negative electrode active material having a relatively small crystal grain size and a uniform particle size distribution, a method of preparing the negative electrode active material, a negative electrode composition, a negative electrode for a lithium secondary battery including the same, and a lithium secondary battery including the negative electrode.

According to an embodiment, the present disclosure provides a negative electrode active material including a silicon-based active material having a crystal grain size of about 300 nm or less, in which the silicon-based active material has a value of about 2.00 or less as defined by Equation 1 below, the silicon-based active material includes $SiO_x$ (x=0) and at least one selected from $SiO_x$ (0<x<2), and the silicon-based active material includes about 70 parts by weight of the $SiO_x$ (x=0) based on 100 parts by weight of the silicon-based active material.

$$[\text{Equation 1}]$$

$$(D90 - D10) / D50$$

In Equation 1, D90, D10, and D50 represent diameters of particles corresponding to 90%, 10%, and 50% by volume in a size distribution, respectively.

According to another embodiment, the present disclosure provides a method of preparing a negative electrode active material, the method including: melting a silicon raw material; and cooling the melted silicon raw material to form a silicon-based active material, in which the cooling includes spraying the melted silicon raw material onto an ultra-vibration low-temperature substrate, the silicon-based active material has a crystal grain size of about 300 nm or less, and the silicon-based active material has a value of about 2.00 or less as defined by Equation 1:

[Equation 1]

$$(D90 - D10) / D50$$

In Equation 1, D90, D10, and D50 represent diameters of particles corresponding to 90%, 10%, and 50% by volume in a size distribution, respectively.

According to yet another embodiment, the present disclosure provides a negative electrode composition including: the negative electrode active material according to the present disclosure; a negative electrode conductive material; and negative electrode binder.

According to still another embodiment, the present disclosure provides a negative electrode for a lithium secondary battery, including: a negative electrode current collector layer, and a negative electrode active material layer provided on one or both sides of the negative electrode current collector layer, in which the negative electrode active material layer includes the negative electrode composition according to the present disclosure or a cured product thereof.

The present disclosure also provides a lithium secondary battery including: a positive electrode; the negative electrode for a lithium secondary battery according to the present disclosure; a separator provided between the positive electrode and the negative electrode; and an electrolyte.

The negative electrode active material of the present disclosure includes $SiO_x$ (x=0) and at least one selected from $SiO_x$ (0<x<2) as a silicon-based active material, and includes about 70 parts by weight or more of the $SiO_x$ (x=0) based on 100 parts by weight of the silicon-based active material, that is, has a pure Si active material, thereby solving the problem of volume expansion due to charge and discharge.

In the case of the negative active material according to one embodiment of the present disclosure, unlike the spherical silicon particles formed by melting and gas atomizing an existing silicon raw material, when a cooling speed is increased through, for example, a sonicated substrate to which low-temperature ultrasonic waves are applied, the silicon-based active material produced by reducing the growth of crystal grains has a small crystal grain size and a uniform particle size distribution.

For example, by forming standing waves within the surface that is atomized through the power of ultrasonication, it is possible to form droplets with a particle size in the range of Equation 1, and by using a low-temperature substrate instead of conventional air, the cooling rate increases and thus, crystal grain growth is reduced, thereby satisfying a specific range of crystal grain sizes.

Accordingly, the formation of cracks in the active material due to lithium insertion/de-insertion may be suppressed by reducing the crystal grain size. In addition, the problem of reduced life performance due to uneven charge/discharge within the electrode may be solved by improving the particle size within the range of Equation 1 to ensure that lithium ions are evenly incorporated into the lithium electrode.

BRIEF DESCRIPTION OF THE DRAWINGS

The following drawings attached hereto exemplify embodiments of the present disclosure and serve to further understand the technical idea of the present disclosure together with the detailed description of the disclosure to be described later. Therefore, the present disclosure should not be construed as being limited to the matters illustrated in the drawings.

FIG. 1 is an enlarged view of a silicon-based active material according to one embodiment of the present disclosure.
FIG. 2 is a flowchart illustrating a method of preparing a negative electrode active material according to one embodiment of the present disclosure.
FIG. 3 is a diagram illustrating a stacked structure of a negative electrode for a lithium secondary battery according to one embodiment of the present disclosure.
FIG. 4 is a diagram illustrating a stacked structure of a lithium secondary battery according to one embodiment of the present disclosure.
FIG. 5 is a diagram illustrating a manufacturing process of the silicon active material according to Example 1 of the present disclosure.
FIG. 6 is a diagram illustrating a manufacturing process of the silicon active material according to Comparative Example 1 of the present disclosure.
FIG. 7 is a diagram illustrating a method for calculating a crystal grain size according to one embodiment of the present disclosure.

Corresponding reference characters indicate corresponding components throughout the several views of the drawings. The drawing figures presented are illustrated for simplicity and clarity and have not necessarily been drawn to scale. For example, the dimensions of some of the elements in the figures may be exaggerated relative to other elements to help to improve understanding of various embodiments. Also, common but well-understood elements that are useful or necessary in a commercially feasible embodiment are often not depicted in order to facilitate a less obstructed view of these various embodiments.

DETAILED DESCRIPTION

Before describing the present disclosure, some terms are defined as indicated below.

Through the specification, when a part is said to "include" a component, this does not exclude other components, but rather includes other components, unless otherwise specifically stated.

As used herein, "p to q" means a range of "p or more and q or less."

As used herein, the "specific surface area" is measured by the Brunauer-Emmett-Teller (BET) method, and is calculated from the nitrogen gas adsorption amount at liquid nitrogen temperature (77 K) using, for example, BELSORP-mino II manufactured by BEL Japan. In the present disclosure, the BET specific surface area may mean the specific surface area measured by the above-mentioned measurement method.

As used herein, "Dn" represents particle size distribution, and means a particle size at the n% point of the cumulative distribution of the number of particles according to particle size. For example, D50 is a particle size (average particle size) at the 50% point of the cumulative distribution of the number of particles according to particle size, D90 is a particle size at the 90% point of the cumulative distribution of the number of particles according to particle size, and D10 is a particle size at the 10% point of the cumulative distribution of the number of particles according to particle size. Meanwhile, the average particle size may be measured using a laser diffraction method. For example, powder to be measured is dispersed in a dispersion medium and introduced into a commercially available laser diffraction particle size measurement device (e.g., Microtrac S3500) to measure the difference in diffraction pattern according to particle size when the particles pass through the laser beam, thereby calculating the particle size distribution.

In one embodiment of the present disclosure, a particle size or particle diameter may mean an average diameter or a representative diameter of each grain forming the metal powder.

As used herein, when a polymer contains a certain monomer as a monomer unit, it means that the monomer participates in a polymerization reaction and is contained as a repeating unit in the polymer. In the specification, when a polymer is said to contain a monomer, it is to be construed as the same as that the polymer contains a monomer as a monomer unit.

As used herein, the term "polymer" is understood to be used in a broad sense to include copolymers unless specified as "homopolymer."

As used herein, the weight average molecular weight (Mw) and number average molecular weight (Mn) are polystyrene-converted molecular weights measured by gel permeation chromatography (GPC) using monodisperse polystyrene polymers (standard samples) of various degrees of polymerization commercially available for molecular weight measurement as standard materials. In the present specification, unless otherwise specified, molecular weight means weight average molecular weight.

In general, a secondary battery or lithium secondary battery is constituted by a positive electrode, a negative electrode, an electrolyte, and a separator. For example, in the case of a lithium secondary battery, the negative electrode includes a negative electrode active material that inserts and releases lithium ions from the positive electrode, and silicon particles having a large discharge capacity may be used as the negative electrode active material.

Recently, as the demand for high-density energy batteries increases, research is actively being conducted on methods to increase the capacity of the batteries by using silicon compounds, such as Si/C or $SiO_x$, which have a capacity about 10 times greater than that of graphite-based materials, as the negative electrode active material. However, silicon-based compounds, which are high-capacity materials, have a relatively large capacity compared to conventionally used graphite, but suffer from the problem that they rapidly expand in volume during charging and/or discharging, which causes the conductive path to be cut off, and degrades the battery characteristics.

In order to solve such problems that occur when silicon-based compounds are used as negative electrode active materials, various methods are being studied, such as methods for controlling the operating potential, methods for additionally coating a thin film on the active material layer, methods for controlling the particle size of the silicon-based compound to suppress the volume expansion itself, or methods for preventing or suppressing the conductive path from being disconnected. However, since the above-mentioned methods may rather lower the performance of the battery, there are limitations in their application, and there are still limitations in the commercialization of negative electrode batteries with a high content of silicon-based compounds.

The present disclosure provides a silicon-based active material capable of preventing or suppressing damage to a conductive path due to volume expansion of a silicon-based compound even when the silicon-based active material is used as a negative electrode active material to improve capacity performance, a method of preparing the negative electrode active material, a negative electrode composition, a negative electrode for a lithium secondary battery including the same, and a lithium secondary battery including the negative electrode.

Hereinafter, embodiments of the present disclosure are described in detail with reference to the drawings to enable one of ordinary skill in the art to which the present disclosure belongs, to readily practice the present disclosure. However, the present disclosure may be implemented in various different forms, and is not limited to the following description.

According to an embodiment, the present disclosure provides a negative electrode active material including a silicon-based active material having a crystal grain size of about 300 nm or less, in which the silicon-based active material has a value of about 2.00 or less as defined by Equation 1 below, the silicon-based active material includes $SiO_x$ (x=0) and at least one selected from $SiO_x$ (0<x<2), and includes about 70 parts by weight of the $SiO_x$ (x=0) based on 100 parts by weight of the silicon-based active material.

$$[\text{Equation 1}]$$

$$(D90 - D10) / D50$$

In Equation 1, D90, D10, and D50 represent diameters of particles corresponding to 90%, 10%, and 50% by volume in a size distribution, respectively.

In one embodiment of the present disclosure, the silicon-based active material may have a value, as defined by Equation 1, of about 2.00 or less, for example, about 1.98 or less, or about 1.97 or less, and may be a value of 1.20 or more, 1.50 or more, or 1.60 or more.

The silicon-based active material according to the present disclosure forms standing waves within the surface that is atomized by the power of ultrasonication, and may have a value of Equation 1 within the above range. Accordingly, since lithium ions are uniformly introduced into the lithium electrode, the problem of reduced life performance due to uneven charge/discharge within the electrode may be solved.

The negative electrode active material of the present disclosure includes $SiO_x$ (x=0) and at least one selected from $SiO_x$ (0<x<2) as a silicon-based active material, and includes about 70 parts by weight or more of the $SiO_x$ (x=0) based on 100 parts by weight of the silicon-based active material. For example, the negative electrode active material has a pure Si active material, and solves the problem of volume expansion due to charge and discharge by controlling the particle size (Equation 1) and controlling the size of the crystal grains within a certain range.

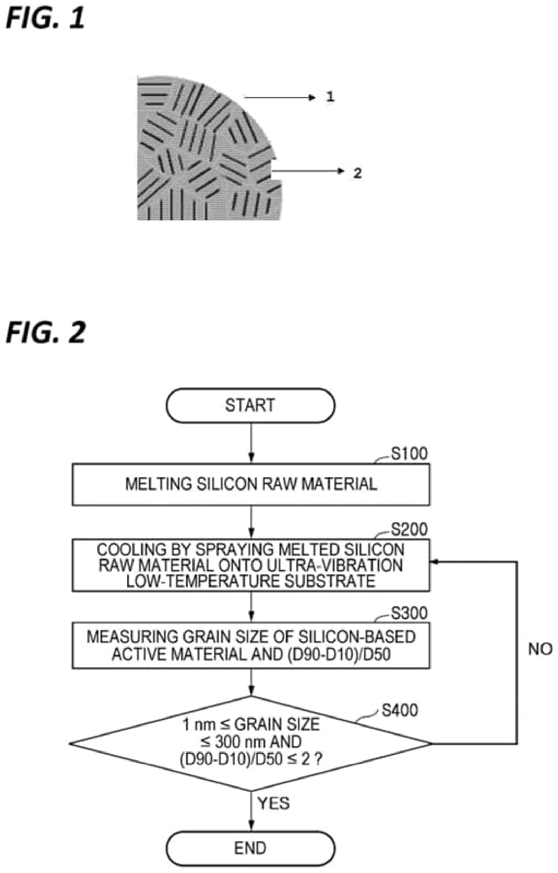

FIG. 1 is an enlarged view of a silicon-based active material according to one embodiment of the present disclosure. The silicon-based active material (1) is made up of a plurality of crystal structures (2), and according to one embodiment, it may be confirmed that the crystal structures have a crystal grain distribution of about 1 nm to 300 nm. In addition, the space between crystal structures may be defined as a crystal grain boundary. In addition, the crystal structure may generally be expressed as a crystal grain.

In one embodiment of the present disclosure, the silicon-based active material includes $SiO_x$ (x=0) and at least one selected from $SiO_x$ (0<x<2), and may include about 70 parts by weight or more of the $SiO_x$ (x=0) based on 100 parts by weight of the silicon-based active material.

In one embodiment of the present disclosure, the silicon-based active material includes $SiO_x$ (x=0), and may include about 70 parts by weight or more of the $SiO_x$ (x=0) based on 100 parts by weight of the silicon-based active material.

In another embodiment, the silicon-based active material may include about 70 parts by weight or more, for example, 80 parts by weight or more, or 90 parts by weight or more of the $SiO_x$ (x=0) based on 100 parts by weight of the silicon-based active material, and may include 100 parts by weight or less, for example, 99 parts by weight or less, or 95 parts by weight or less.

In one embodiment of the present disclosure, pure silicon (Si) particles may be used as the silicon-based active material. Using pure silicon (Si) particles as the silicon-based active material may mean that, based on 100 parts by weight of the total silicon-based active material, pure Si particles ($SiO_x$ (x=0)) that are not combined with other particles or elements are included within the above range.

In one embodiment of the present disclosure, the silicon-based active material may be formed of silicon-based particles having 100 parts by weight of $SiO_x$ (x=0) based on 100 parts by weight of the silicon-based active material.

According to one embodiment, the crystal grain size of the $SiO_x$ (x=0) may be about 300 nm or less.

In one embodiment of the present disclosure, the silicon-based active material may include a metal impurity. In this case, the impurity may be a metal that may be generally included in the silicon-based active material, and may include, for example, about 0.1 part by weight or less based on 100 parts by weight of the silicon-based active material.

In the case of silicon-based active materials, attempts to apply the materials are increasing because their capacity is significantly higher compared to the graphite-based active materials used in the past. However, due to their high volume expansion rate during charge and discharge, they are only used in trace amounts in mixture with graphite-based active materials.

Therefore, in the case of the present disclosure, in order to improve capacity performance, only a silicon-based active material is used as a negative electrode active material, and in order to solve the problem of volume expansion due to charge and discharge as described above, the existing problem is solved by controlling the average particle diameter (D50) and crystal grain size of the silicon-based active material itself rather than controlling the composition of the conductive agent and binder.

According to one embodiment of the present disclosure, the crystal grain size of the silicon-based active material may be about 300 nm or less.

In another embodiment, the crystal grain size of the silicon-based active material may be 300 nm or less, for example, 290 nm or less, 260 nm or less, 258 nm or less, 255 nm or less, or 253 nm or less. In one embodiment, the crystal grain size of the silicon-based active material may have a range of about 10 nm or more, for example, 100 nm or more.

The silicon-based active material has the above-mentioned crystal grain size, and the crystal grain size of the silicon-based active material may be controlled by changing the process conditions in the manufacturing process described below. In this case, the crystal grain boundary is widely distributed by satisfying the above range, so that when lithium ions are inserted, the lithium ions may enter uniformly, thereby reducing the stress on the insertion of lithium ions in the silicon particles, and thereby alleviating the cracking of the particles. As a result, the life stability of the negative electrode may be improved.

In one embodiment of the present disclosure, the silicon-based active material includes a crystal structure having a crystal grain distribution of about 1 nm to 300 nm, and a negative electrode active material is provided in which an area ratio of the crystal structure is about 5% or less based on the total area of the silicon-based active material.

In another embodiment, the area ratio of the crystal structure based on the total area of the silicon-based active material may be about 5% or less, or about 3% or less, and may be about 0.1% or more.

The silicon-based active material according to the present disclosure has a crystal grain size of about 300 nm or less, so that the size of one crystal structure is formed relatively small, and the area ratio may be satisfied. Accordingly, the distribution of crystal grain boundary may be relatively widened, and accordingly, the above-mentioned effects, for example, the effect of suppressing volume expansion during charge and discharge, may be exhibited.

In one embodiment of the present disclosure, a negative active material is provided in which the number of crystal structures included in the silicon-based active material is about 20 or more.

The number of crystal structures included in the silicon-based active material may refer to the number of each crystal structure in FIG. 1. That is, the silicon-based active material itself may be made up of a plurality of crystal structures, and in this case, the number of crystal structures may be about 20 or more.

In another embodiment, the number of crystal structures included in the silicon-based active material may be 20 or more, 30 or more, or 35 or more, and may satisfy a range of 60 or less, or 50 or less.

As described above, when the silicon-based active material has a crystal grain size that satisfies the above range and also has a number of crystal structures that satisfies the above range, the strength of the silicon-based active material itself has an appropriate range, which may impart flexibility when included in the electrode, and may also effectively suppress volume expansion.

In the present disclosure, the crystal grain means a crystal particle that is an aggregation of irregular shapes of microscopic size in a metal or material, and the crystal grain size may mean the diameter of an observed crystal grain. That is, in the present disclosure, the crystal grain size means the size of a domain that shares the same crystal direction within a particle, and is a different concept from the particle size or particle diameter that expresses the size of a material.

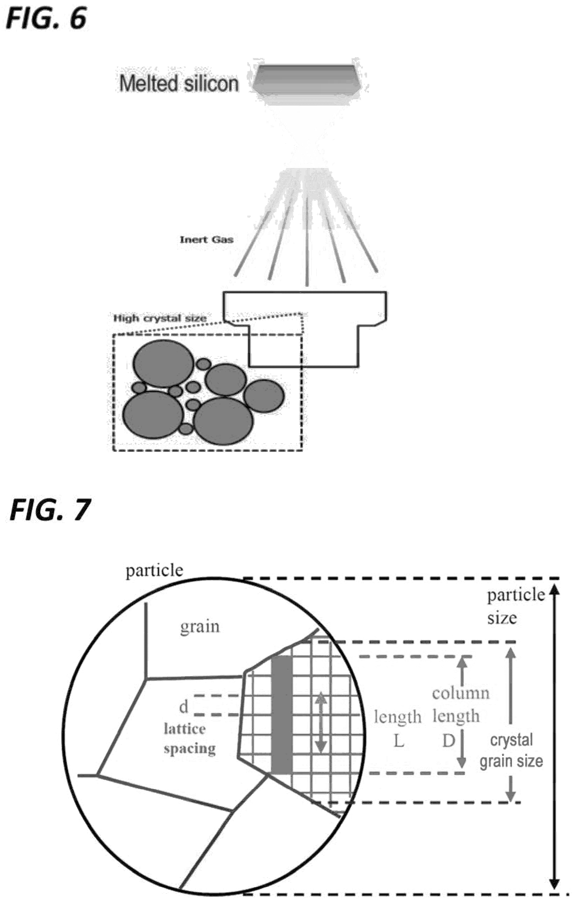

In one embodiment of the present disclosure, the crystal grain size may be calculated as the FWHM (Full Width at Half Maximum) value through XRD analysis. For example, a method for calculating the crystal grain size may be seen in FIG. 7. The remaining values except for L in FIG. 7 are measured through XRD analysis of a silicon-based active material, and the crystal grain size may be measured through the Debey-Scherrer equation, which indicates that the FWHM and the crystal grain size are inversely proportional. In this case, the Debey-Scherrer equation is as expressed in Equation 1-1 below.

$$[\text{Equation } 1\text{-}1]$$

$$FWHM = (K\lambda) / (L\,COS\theta)$$

In Equation 1-1, L represents a crystal grain size, K is a constant, $\theta$ is a Bragg angle, and $\lambda$ represents a wavelength of X-ray.

In addition, the shape of the crystal grains is diverse and may be measured three-dimensionally, and the size of the crystal grains may generally be measured using the commonly used circle method or diameter measurement method, but is not limited thereto.

The diameter measurement method may be measured by drawing 5 to 10 parallel lines, each of which is L mm long, on a microscope photograph of the target particle, and counting and averaging the number of crystal grains z on the lines. At this time, only those that are completely included are counted, and those that intersect are excluded. When the number of lines is P, and the magnification is V, the average particle diameter may be calculated using Equation 1-2 below.

$$[\text{Equation 1-2}]$$

$$Dm = (L*P*10^3)/(zV) \text{ (um)}$$

In addition, the circle method is a method of calculating the average area of crystal grains by drawing a circle of a set diameter on a microscope photograph of the target particle and calculating the number of crystal grains within the circle and the number of crystal grains that fall on the boundary line using Equation 1-3 below.

$$[\text{Equation 1-3}]$$

$$Fm = (Fk * 10^6) / ((0.67n + z)* V2) \text{ (um}^2)$$

In Equation 1-3, Fm represents an average particle area, Fk represents a measured area on the photograph, z represents the number of particles within the circle, n represents the number of particles within the circular arc, and V represents a magnification of the microscope.

In one embodiment of the present disclosure, the silicon-based active material may include silicon-based particles having a particle size distribution of about 0.01 $\mu$m or more and 30 $\mu$m or less.

When the silicon-based active material includes silicon-based particles having a particle size distribution of about 0.01 $\mu$m to 30 $\mu$m, it is meant that the silicon-based active material includes a plurality of individual silicon-based particles having a particle size within the above range, and the number of silicon-based particles included is not limited.

The particle size of the silicon-based particles may be expressed by their diameter when the particles are spherical. However, even when the particles have a shape other than the spherical shape, the particle size may be measured relative to the spherical case, and the particle size of individual silicon-based particles may be measured by a method generally used in the art.

Meanwhile, the average particle diameter (D50 particle size) of the silicon-based active material of the present disclosure is about 1 $\mu$m or more and 9 $\mu$m or less, for example, about 2 $\mu$m to 8 $\mu$m, or may be about 3 $\mu$m to 8 $\mu$m. When the average particle diameter is within the above range, the specific surface area of the particles is within an appropriate range, so that the viscosity of the negative electrode slurry is formed within an appropriate range. Accordingly, the particles constituting the negative electrode slurry are smoothly dispersed. In addition, when the size of the silicon-based active material is greater than the lower limit range, the contact area between the silicon particles and the conductive material is excellent due to the composite made up of the conductive material and the binder in the negative electrode slurry, so that the possibility of the conductive network being sustained increases, thereby increasing the capacity retention rate. Meanwhile, when the average particle diameter satisfies the above range, excessively large silicon particles are excluded, so that the surface of the negative electrode is formed smoothly, and thus the phenomenon of uneven current density during charge and discharge may be suppressed.

In the present disclosure, a negative electrode active material is provided, in which the crystal grain size of the silicon-based active material is about 1 nm or more and 300 nm or less, and the average particle diameter (D50) of the silicon-based active material is about 3 $\mu$m or more and 8 $\mu$m or less.

In one embodiment of the present disclosure, the silicon-based active material generally has a characteristic BET surface area. The BET surface area of the silicon-based active material is about 0.01 m$^2$/g to 150 m$^2$/g, or 0.1 m$^2$/g to 100 m$^2$/g, or about 0.2 m$^2$/g to 80 m$^2$/g, or 0.2 m$^2$/g to 18 m$^2$/g. The BET surface area is measured (using nitrogen) according to DIN 66131.

In one embodiment of the present disclosure, the silicon-based active material may exist in, for example, a crystalline or amorphous form, and is, for example, nonporous. According to one embodiment, the silicon particles are spherical or fragment-shaped particles. Alternatively, the silicon particles may also have a fibrous structure or may be present in the form of a silicon-containing film or coating.

In one embodiment of the present disclosure, the silicon-based active material may have a non-spherical shape, and its circularity is, for example, about 0.9 or less, for example, about 0.7 to 0.9, for example, about 0.8 to 0.9, for example, about 0.85 to 0.9.

In the present disclosure, the circularity is determined by Equation 1-A below, where A is an area, and P is a boundary line.

[Equation 1-A]

$$4\pi A/P^2$$

According to one embodiment of the present disclosure, a negative electrode composition is provided, which includes the negative electrode active material as described above; a negative electrode conductive material; and negative electrode binder.

In one embodiment of the present disclosure, a negative active material is provided in which the negative electrode active material is at least about 40 parts by weight based on 100 parts by weight of the negative electrode composition.

In another embodiment, the negative electrode active material may be included in an amount of about 40 parts by weight or more, for example, about 60 parts by weight or more, about 65 parts by weight or more, or about 70 parts by weight or more, and may be about 95 parts by weight or less, about 90 parts by weight or less, or about 85 parts by weight or less, based on 100 parts by weight of the negative electrode composition.

The negative electrode composition according to the present application uses a negative electrode active material that satisfies a specific crystal grain size capable of controlling a volume expansion rate during a charge and discharge process even when a silicon-based active material having a significantly high capacity is used within the above range, so that the performance of the negative electrode is not deteriorated even within the above range, and the output characteristics during charge and discharge are excellent.

Previously, it was common to use only graphite compounds as negative electrode active materials, but recently, as the demand for high-capacity batteries has increased, attempts to mix and use silicon-based active materials to increase the capacity of batteries have been increasing. However, in the case of silicon-based active materials, even when the characteristics of the silicon-based active material itself are adjusted as described above, there may be some problems that the volume rapidly expands during the charging/discharging process, which may damage the conductive path formed within the negative electrode active material layer.

In one embodiment of the present disclosure, the negative electrode conductive material may include at least one selected from a point-type conductive material, a surface-type conductive material, and a line-type conductive material.

In one embodiment of the present disclosure, the point-type conductive material may be used to improve conductivity of the negative electrode, and means a point-type or spherical conductive material having conductivity without causing a chemical change. For example, the point-type conductive material may be at least one selected from natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and polyphenylene derivatives. According to one embodiment, the point-type conductive material may include carbon black in terms of its relatively high conductivity and excellent dispersibility.

In one embodiment of the present disclosure, the point-type conductive material may have a BET surface area of about 40 $m^2/g$ or more and 70 $m^2/g$ or less, for example, about 45 $m^2/g$ or more and 65 $m^2/g$ or less, or about 50 $m^2/g$ or more and 60 $m^2/g$ or less.

In one embodiment of the present disclosure, the point-type conductive material may satisfy a functional group (volatile matter) content of about 0.01% or more and 1% or less, for example, 0.01% or more and 0.3% or less, or 0.01% or more and 0.1% or less.

When the functional group content of the point-type conductive material satisfies the above range, a functional group present on the surface of the point-type conductive material, so that when water is used as a solvent, the point-type conductive material may be smoothly dispersed in the solvent. In the present disclosure, by using a specific silicon-based active material, the functional group content of the point-type conductive material may be reduced, thereby having an excellent effect in improving dispersibility.

In one embodiment of the present disclosure, a point-type conductive material having a functional group content within the above range is included together with a silicon-based active material, and the control of the functional group content may be controlled according to the degree of heat treatment of the point-type conductive material.

In one embodiment of the present disclosure, the particle size of the point-type conductive material may be about 10 nm to 100 nm, for example, about 20 nm to 90 nm, or about 20 nm to 60 nm.

In one embodiment of the present disclosure, the conductive material may include a surface-type conductive material.

The surface-type conductive material may play a role in improving conductivity by increasing planar contact between silicon particles in the negative electrode, and at the same time suppressing disconnection of the conductive path due to volume expansion. The surface-type conductive material may be expressed as a plate-shaped conductive material or a bulk conductive material.

In one embodiment of the present disclosure, the surface-type conductive material may include at least one selected from plate-shaped graphite, graphene, graphene oxide, and graphite flakes, and may be, for example, plate-shaped graphite.

In one embodiment of the present disclosure, the average particle diameter (D50) of the surface-type conductive agent may be about 2 $\mu$m to 7 $\mu$m, for example, about 3 $\mu$m to 6 $\mu$m, or about 3.5 $\mu$m to 5 $\mu$m. When the above range is satisfied, the particle size is sufficient to facilitate dispersion without causing an excessive increase in viscosity of the negative electrode slurry. Therefore, the dispersion effect is excellent when dispersion is performed using the same equipment and time.

In one embodiment of the present disclosure, the surface-type conductive material provides a negative electrode composition having a D10 of about 0.5 $\mu$m or more and 2.0 $\mu$m or less, a D50 of about 2.5 $\mu$m or more and 3.5 $\mu$m or less, and a D90 of about 6.5 $\mu$m or more and 15.0 $\mu$m or less.

In one embodiment of the present disclosure, the surface-type conductive material may be a high-specific surface area surface-type conductive material having a high BET surface area; or a low-specific surface area surface-type conductive material.

In one embodiment of the present disclosure, a high-specific surface area surface-type conductive material or a low-specific surface area surface-type conductive material may be used without any limitation as the surface-type conductive material. However, since the surface-type conductive material according to the present disclosure may be affected to some extent by dispersion influence on electrode performance, a low-specific surface area surface-shape conductive material that does not cause dispersion problems may be used.

In one embodiment of the present disclosure, the surface-type conductive material may have a BET specific surface area of about 1 $m^2$/g or more.

In another embodiment, the surface-type conductive material may have a BET specific surface area of about 1 $m^2$/g or more and 500 $m^2$/g or less, for example, about 5 $m^2$/g or more and 300 $m^2$/g or less, or about 5 $m^2$/g or more and 250 $m^2$/g or less.

The surface-type conductive material according to the present disclosure may use a high-specific surface area surface-type conductive material or a low-specific surface area surface-type conductive material.

In another embodiment, the surface-type conductive material is a high-specific surface area surface-type conductive material, and may have a BET surface area in a range of about 50 $m^2$/g to 500 $m^2$/g, for example, about 80 $m^2$/g to 300 $m^2$/g, or about 100 $m^2$/g to 300 $m^2$/g.

In yet another embodiment, the surface-type conductive material is a low-specific surface area surface-type conductive material, and may have a BET surface area in a range of about 1 $m^2$/g to 40 $m^2$/g, for example, about 5 $m^2$/g to 30 $m^2$/g, or about 5 $m^2$/g to 25 $m^2$/g.

Other conductive materials may include line-type conductive materials such as carbon nanotubes. The carbon nanotubes may be bundle-type carbon nanotubes. The bundle-type carbon nanotubes may include a plurality of carbon nanotube units. Here, unless otherwise stated, the term "bundle type" refers to a secondary shape in the form of a bundle or rope in which a plurality of carbon nanotube units are arranged in a substantially same orientation in a parallel manner or entangled with the longitudinal axes of the carbon nanotube units. The carbon nanotube units have a cylindrical shape of a graphite sheet with a nano-sized diameter and an sp2 bonding structure. At this time, depending on the angle and structure at which the graphite sheet is rolled, the characteristics of a conductor or a semiconductor may be exhibited. The bundle type carbon nanotubes may be uniformly dispersed during the manufacture of a negative electrode compared to entangled type carbon nanotubes, and may smoothly form a conductive network within the negative electrode, thereby improving the conductivity of the negative electrode.

In one embodiment of the present disclosure, a negative electrode composition is provided in which the negative electrode conductive material is present in an amount of about 10 parts by weight or more and 40 parts by weight or less based on 100 parts by weight of the negative electrode composition.

In another embodiment, the negative electrode conductive material may be included in an amount of about 0.1 to 40 parts by weight, for example, about 0.2 to 30 parts by weight, or about 0.4 to 25 parts by weight, or about 0.4 to 10 parts by weight, based on 100 parts by weight of the negative electrode composition.

In one embodiment of the present disclosure, the negative electrode conductive material provides a negative electrode composition including a surface-type conductive material and a line-type conductive material.

In one embodiment of the present disclosure, a negative electrode composition is provided in which the negative electrode conductive material includes about 80 parts by weight or more and 99.9 parts by weight or less of the surface-type conductive material; and about 0.1 parts by weight or more and 20 parts by weight or less of the line-type conductive material, based on 100 parts by weight of the negative electrode conductive material.

In another embodiment, the negative electrode conductive material may include the surface-type conductive material in an amount of about 80 parts by weight or more and 99.9 parts by weight or less, for example, about 85 parts by weight or more to 99.9 parts by weight or less, or about 95 parts by weight or more to 98 parts by weight or less based on 100 parts by weight of the negative electrode conductive material.

In another embodiment, the negative electrode conductive material may include the line-type conductive material in an amount of about 0.1 to 20 parts by weight, for example, about 0.1 to 15 parts by weight, or about 0.2 to 5 parts by weight, based on 100 parts by weight of the negative electrode conductive material.

In one embodiment of the present disclosure, since the negative electrode conductive material includes a surface-type conductive material and a line-type conductive material, and satisfies the above composition and ratio, respectively, the life characteristics of an existing lithium secondary battery are not significantly affected, and in the case of including the surface-type conductive material and the line-type conductive material, the number of points at which charging and discharging are possible increases, so that the output characteristics are excellent at a high C-rate and the amount of high-temperature gas generation is reduced.

In one embodiment of the present disclosure, the negative electrode conductive material may be made up of a line-type conductive material.

According to one embodiment, when a line-type conductive material is used alone, the electrode tortuosity, which is a problem of silicon-based negative electrodes, may be simplified, thereby improving the electrode structure and reducing the movement resistance of lithium ions within the electrode.

In one embodiment of the present disclosure, when the negative electrode conductive material includes a line-type conductive material alone, the negative electrode conductive material may be included in an amount of about 0.1 part by weight or more and 5 parts by weight or less, for example, about 0.2 parts by weight or more and 3 parts by weight or less, or about 0.4 parts by weight or more and 1 part by weight or less, based on 100 parts by weight of the negative electrode composition.

The negative electrode conductive material according to the present disclosure has a completely separate composition from the positive electrode conductive material applied to the positive electrode. The negative electrode conductive material according to the present disclosure plays a role of holding the contact point between silicon-based active materials, which greatly expand the volume of the electrode due to charging and discharging, and the positive electrode conductive material plays a role of providing some conductivity while acting as a buffer when rolled, and is completely different in composition and role from the negative electrode conductive material of the present disclosure.

In addition, the negative electrode conductive material according to the present disclosure is applied to a silicon-based active material, and has a composition that is completely different from that of a conductive material applied to a graphite-based active material. That is, the conductive material used in an electrode having a graphite-based active material simply has smaller particles compared to the active material, and thus has the characteristics of improving output characteristics and imparting some conductivity, and is completely different in composition and role from the negative electrode conductive material applied together with a silicon-based active material, as in the present disclosure.

In one embodiment of the present disclosure, the surface-type conductive material used as the negative electrode conductive material has a structure and a role different from those of the carbon-based active material generally used as the negative electrode active material. For example, the carbon-based active material used as the negative electrode active material may be artificial graphite or natural graphite, and refers to a material processed into a spherical or point-type form to facilitate the storage and release of lithium ions.

The surface-type conductive material used as the negative electrode conductive material is a material having a planar or plate-like shape, and may be expressed as plate-like graphite. That is, the surface-type conductive material refers to a material included to maintain a conductive path within the negative electrode active material layer, and refers to a material that secures a planar conductive path within the negative electrode active material layer rather than a material that plays a role in storing and releasing lithium.

In the present disclosure, the use of plate-shaped graphite as a conductive material means that it is processed into a planar or plate-shaped form and used as a material that secures a conductive path rather than a role of storing or releasing lithium. In this case, the negative electrode active material included together has high capacity characteristics for lithium storage and release, and plays a role of storing and releasing all lithium ions transferred from the positive electrode.

In the present disclosure, the use of a carbon-based active material as an active material means that it is processed into a dot or spherical shape and used as a material that stores or releases lithium.

In one embodiment of the present disclosure, the carbon-based active material, which is artificial graphite or natural graphite, may have a dot-like shape and a BET surface area satisfying a range of about 0.1 $m^2$/g or more and 4.5 $m^2$/g or less. In addition, the plate-like graphite, which is a surface-type conductive material, may have a BET surface area of about 5 $m^2$/g or more in the shape of a surface.

In one embodiment of the present disclosure, the negative electrode binder may include at least one selected from polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinyl pyrrolidone, tetrafluoroethylene, polyethylene, polypropylene, polyacrylic acid, ethylene-propylene-diene monomer (EPDM), sulfonated EPDM, styrene butadiene rubber (SBR), fluororubber, poly acrylic acid, and materials in which hydrogens thereof are substituted with Li, Na or Ca, and may also include various copolymers thereof.

The negative electrode binder according to one embodiment of the present disclosure serves to hold the active material and the conductive material in order to suppress distortion and structural deformation of the negative electrode structure in volume expansion and relaxation of the silicon-based active material, and any general binder may be applied when the above role is satisfied. For example, a water-based binder may be used or a PAM-based binder may be used.

In one embodiment of the present disclosure, the negative electrode binder may be about 30 parts by weight or less, for example, about 25 parts by weight or less, or about 20 parts by weight or less, based on 100 parts by weight of the negative electrode composition, and according to one embodiment, may be about 5 parts by weight or more, or about 10 parts by weight or more.

FIG. 2 is a flowchart illustrating a method of preparing a negative electrode active material according to one embodiment of the present disclosure. Referring to FIG. 2, the method of preparing a negative electrode active material according to an embodiment of the present disclosure includes steps of melting a silicon raw material (S100); cooling the melted silicon raw material by spraying the melted silicon onto an ultra-vibration low-temperature substrate (S200); and measuring a crystal grain size and (D90 - D10)/D50 of a silicon-based active material (S300). Thereafter, the method of preparing a negative electrode active material according to an embodiment of the present disclosure includes a step of determining whether the crystal grain size measured in the measuring step is 1 nm or more and 300 nm or less, and whether the measured (D90 - D10)/D50 value is 2 or less (S400).

In the case of the preparation method according to the present disclosure, unlike the spherical silicon particles formed by melting and gas atomizing existing Metallurgical Grade Silicon (MG-Si), a silicon-based active material having small crystal grains and a uniform particle size distribution of Equation 1 may be manufactured through a low-temperature sonicated substrate to which ultrasonic waves are applied. With the above characteristics, crack formation in the active material due to lithium insertion/de-insertion may be suppressed, and the problem of reduced life performance due to uneven charge/discharge within the electrode may be solved by evenly introducing lithium ions into the lithium electrode due to the improvement in uniform particle size.

In the present disclosure, the method of preparing a negative electrode active material is provided, in which the vibration frequency of the ultra-vibration low-temperature substrate is about 1 kHz or more and 1500 kHz or less.

In another embodiment, the vibration frequency of the ultra-vibration low-temperature substrate may be about 1 kHz or more and 1500 kHz or less, for example, 5 kHz or more and 1300 kHz or less, or 10 kHz or more and 1,000 kHz or less.

In one embodiment of the present disclosure, the method of preparing a negative electrode active material is provided, in which the cooling temperature in the step of cooling the molten silicon raw material to form a silicon-based active material is about 20 °C or less.

In another embodiment, the cooling temperature in the step of cooling the molten silicon raw material to form a silicon-based active material may be about 20 °C or lower, -20 °C or higher, or -10 °C or higher.

In the present disclosure, the cooling is controlled by controlling the cooling temperature of the solvent using a cooling solvent. The cooling solvent may be used without limitation as long as the cooling temperature is satisfied, but according to one embodiment, water or ethylene glycol may be used.

The method of preparing a negative active material according to the present disclosure applies the preparing process described above, and a silicon-based active material satisfying the crystal grain size and particle size distribution (Equation 1) may be obtained by controlling the cooling rate.

According to one embodiment, the present disclosure provides a negative electrode for a lithium secondary battery, including: a negative electrode current collector layer, and a negative electrode active material layer provided on one or both sides of the negative electrode current collector layer, in which the negative electrode active material layer includes the negative electrode composition according to the present disclosure or a cured product thereof.

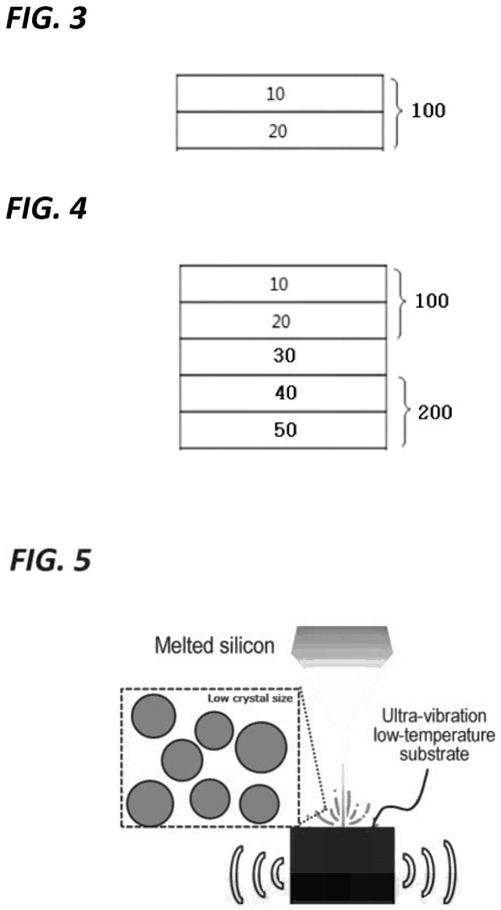

FIG. 3 is a diagram illustrating a stacked structure of a negative electrode for a lithium secondary battery according to one embodiment of the present disclosure. Referring to FIG. 3, a negative electrode 100 for a lithium secondary battery includes a negative electrode active material layer 20 on one surface of a negative electrode current collector layer 10. FIG. 4 illustrates that the negative electrode active material layer 20 is formed on one surface of the negative electrode current collector layer 10, but is not limited thereto, and for example, the negative electrode active material layer 20 may be formed on both surfaces of the negative electrode current collector layer 10.

In one embodiment of the present disclosure, the negative electrode 100 for the lithium secondary battery may be formed by applying and drying a negative electrode slurry containing the negative electrode composition to one side or both sides of the negative electrode current collector layer 10.

At this time, the negative electrode slurry may include the negative electrode composition and a slurry solvent.

In one embodiment of the present disclosure, the solid content included in the negative electrode slurry may be about 5% or more and 40% or less based on 100 parts by weight of the negative electrode slurry.

In another embodiment, the solid content included in the negative electrode slurry may be about 5% or more and 40% or less, for example, about 7% or more and 35% or less, or about 10% or more and 30% or less based on 100 parts by weight of the negative electrode slurry.

When the solid content of the negative electrode slurry satisfies the above range, the viscosity is appropriate during the formation of the negative electrode active material layer, so that the particle agglomeration phenomenon of the negative electrode composition is minimized, and the negative electrode active material layer may be efficiently formed.

In one embodiment of the present disclosure, the slurry solvent may be used without limitation as long as it is capable of dissolving the negative electrode composition, and examples thereof may include water or NMP (N-methyl-2-pyrrolidone).

In one embodiment of the present disclosure, the negative electrode current collector layer generally has a thickness of about 1 $\mu$m to 100 $\mu$m. The negative electrode current collector layer is not particularly limited as long as it has relatively high conductivity without causing chemical changes in the battery, and examples thereof include copper, stainless steel, aluminum, nickel, titanium, calcined carbon, copper or stainless steel surface-treated with carbon, nickel, titanium, or silver, and aluminum-cadmium alloy. In addition, the negative electrode collector layer may have fine unevenness formed on the surface to strengthen the bonding strength of the negative electrode active material, and may be used in various forms such as a film, sheet, foil, net, porous body, foam, and non-woven fabric.

In the negative electrode for a lithium secondary battery provided according to one embodiment of the present disclosure, the thickness of the negative electrode current collector layer is about 1 $\mu$m or more and 100 $\mu$m or less, and the thickness of the negative electrode active material layer is about 5 $\mu$m or more and 500 $\mu$m or less.

However, the thickness may be modified in various ways depending on the type and purpose of the negative electrode used and is not limited thereto.

In one embodiment of the present disclosure, the porosity of the negative electrode active material layer may be about 10% or more and 60% or less.

In another embodiment, the porosity of the negative electrode active material layer may be about 10% or more and 60% or less, for example, about 20% or more and 50% or less, or about 30% or more and 45% or less.

The porosity varies depending on the composition and content of the silicon-based active material, the conductive material, and the binder included in the negative electrode active material layer. By including the silicon-based active material and the conductive material according to the present disclosure in a specific composition and contents thereof, the above range is satisfied, and accordingly, the electric conductivity and resistance of the electrode have an appropriate range.

A lithium secondary battery provided according to one embodiment of the present disclosure includes a positive electrode, the negative electrode for a lithium secondary battery according to the present disclosure, a separator provided between the positive electrode and the negative electrode, and an electrolyte.

FIG. 4 is a diagram illustrating a stacked structure of a lithium secondary battery according to one embodiment of the present disclosure. Referring to FIG. 4, the negative electrode 100 for a lithium secondary battery includes the negative active material layer 20 on one side of a negative current collector layer 10, and a positive electrode 200 for a lithium secondary battery includes a positive active material layer 40 on one side of a positive current collector layer 50. In addition, the lithium secondary battery negative electrode 100 and the lithium secondary battery positive electrode 200 are formed in a stacked structure with a separator 30 interposed therebetween.

The positive electrode may include a positive electrode current collector, and a positive electrode active material layer formed on the positive electrode current collector and including the positive electrode active material layer.

In the positive electrode, the positive electrode current collector is not particularly limited as long as it has conductivity without causing chemical changes in the battery, and examples thereof include stainless steel, aluminum, nickel, titanium, calcined carbon, and aluminum or stainless steel surface-treated with carbon, nickel, titanium, or silver. The positive electrode current collector may typically have a thickness of about 3 $\mu$m to 500 $\mu$m, and fine unevenness may be formed on the surface of the positive electrode current collector to strengthen the bonding strength of the positive electrode active material. For example, the positive electrode collector may be used in various forms, such as a film, a sheet, a foil, a net, a porous body, a foam, a non-woven body, and the like.

The positive electrode active material may be a commonly used positive electrode active material. Specifically, the positive electrode active material may be a layered compound such as lithium cobalt oxide ($LiCoO_2$), lithium nickel oxide ($LiNiO_2$), or a compound substituted with one or more transition metals; lithium iron oxide such as $LiFe_3O_4$; lithium manganese oxide such as $Li_{1+c}1Mn_{2-c1}O_4$ ($0 \leq c1 \leq 0.33$), $LiMnO_3$, $LiMn_2O_3$, and $LiMnO_2$; lithium copper oxide ($Li_2CuO_2$); vanadium oxide such as $LiV_3O_8$, $V_2O_5$, and $Cu_2V_2O_7$; Ni-site type lithium nickel oxide expressed by the chemical formula $LiNi_{1-c2}M_{c2}O_2$ (wherein, M is at least one selected from Co, Mn, Al, Cu, Fe, Mg, B, and Ga, and satisfies $0.01 \leq c2 \leq 0.3$); a lithium manganese composite oxide represented by the chemical formula $LiMn_{2-c3}M_{c3}O_2$ (wherein, M is at least one selected from Co, Ni, Fe, Cr, Zn, and Ta, and satisfies $0.01 \leq c3 \leq 0.1$) or $Li_2Mn_3MO_8$ (wherein, M is at least one selected from Fe, Co, Ni, Cu, and Zn); $LiMn_2O_4$, in which a part of Li in the chemical formula is replaced with an alkaline earth metal ion; but the present disclosure is not limited thereto. For example, the positive electrode may be Li-metal.

The positive electrode active material layer may include a positive electrode conductive material and a positive electrode binder together with the positive electrode active material described above.

In this case, the positive electrode conductive material used to impart conductivity to the electrode may be any material that is electrically conductive without causing chemical changes in the battery to be constructed, without any particular limitation. Examples thereof include graphite such as natural graphite or artificial graphite; carbon-based materials such as carbon black, acetylene black, Ketjen black, channel black, furnace black, lamp black, thermal black, and carbon fiber; metal powder or metal fiber such as copper, nickel, aluminum, and silver; conductive whiskers such as zinc oxide and potassium titanate; conductive metal oxides such as titanium oxide; or conductive polymers such as polyphenylene derivatives, which may be used alone or in mixture of two or more thereof.

In addition, the positive electrode binder serves to improve the adhesion between positive electrode active material particles and the adhesive strength between the positive electrode active material and the positive electrode current collector. Examples thereof include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene polymer (EPDM), sulfonated-EPDM, styrene butadiene rubber (SBR), fluororubber, or various copolymers thereof, which may be used alone or in mixture of two or more thereof.

The separator separates the negative electrode and the positive electrode and provides a migration passage for lithium ions. Any separator that is usually used as a separator in secondary batteries may be used without special restrictions, and any material having low resistance to ion migration in the electrolyte and excellent electrolyte moisture retention capacity may be used. For example, the separator may be a porous polymer film, for example, a porous polymer film made of a polyolefin polymer such as ethylene homopolymer, propylene homopolymer, ethylene/butene copolymer, ethylene/hexene copolymer, and ethylene/methacrylate copolymer, or a laminated structure of two or more layers thereof. In addition, a conventional porous non-woven fabric, for example, a non-woven fabric made of high-melting-point glass fiber, or polyethylene terephthalate fiber may be used. In addition, a coated separator containing a ceramic component or a polymer material may be used to secure heat resistance or mechanical strength, and may be selectively used in a single-layer or multi-layer structure.

The electrolyte used in the present disclosure may include, but is not limited to, an organic liquid electrolyte, an inorganic liquid electrolyte, a solid polymer electrolyte, a gel-type polymer electrolyte, a solid inorganic electrolyte, a molten inorganic electrolyte, and the like that may be used in the manufacture of a lithium secondary battery.

In one embodiment, the electrolyte may include a non-aqueous organic solvent and a metal salt.

Examples of the non-aqueous organic solvent include an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimethoxyethane, tetrahydrofuran, 2-methyl tetrahydrofuran, dimethyl sulfoxide, 1,3-dioxolan, formamide, dimethylformamide, dioxolan, acetonitrile, nitromethane, methyl formate, methyl acetate, triester phosphoric acid, trimethoxy methane, dioxolan derivatives, sulfolane, methyl sulfolane, 1,3-dimethyl-2-imidazolidinone, propylene carbonate derivatives, tetrahydrofuran derivatives, ethers, methyl pyrropionate, and ethyl propionate.

Among the carbonate-based organic solvents, ethylene carbonate and propylene carbonate, which are cyclic carbonates, are high-viscosity organic solvents with high dielectric constants, and thus may be used as non-aqueous solvents because they relatively easily dissociate lithium salts. When low-viscosity, low-dielectric constant linear carbonates, such as dimethyl carbonate and diethyl carbonate, are mixed and used in an appropriate ratio with these cyclic carbonates, an electrolyte with relatively high electrical conductivity may be prepared, which may be used as a non-aqueous solvent.

The metal salt may be a lithium salt, and the lithium salt is a substance that is easily dissolved in the non-aqueous electrolyte. For example, an anion of the lithium salt may be at least one selected from $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$.

In addition to the electrolyte components, the electrolyte may further contain one or more additives, such as, for example, haloalkylene carbonate compounds such as difluoroethylene carbonate, pyridine, triethylphosphite, triethanolamine, cyclic ethers, ethylene diamine, n-glyme, hexaphosphoric acid triamide, nitrobenzene derivatives, sulfur, quinone imine dyes, N-substituted oxazolidinones, N,N-substituted imidazolidines, ethylene glycol dialkyl ethers, ammonium salts, pyrrole, 2-methoxy ethanol, or aluminum trichloride, for the purpose of improving the life characteristics of the battery, suppressing battery capacity decrease, and improving the discharge capacity of the battery.

One embodiment of the present disclosure provides a battery module including the secondary battery as a unit cell and a battery pack including the same. Since the battery module and the battery pack include the secondary battery having high capacity, high rate characteristics, and cycle characteristics, they may be used as a power source for medium- and large-sized devices selected from electric vehicles, hybrid electric vehicles, plug-in hybrid electric vehicles, and power storage systems.

Hereinafter, examples are presented to help understand the present disclosure, but the examples presented below are only illustrative of the present disclosure, and it will be apparent to those skilled in the art that various changes and modifications are possible within the scope and technical idea of the present disclosure, and that such changes and modifications fall within the scope of the appended patent claims.

<Preparation Example>

<Preparation of Negative Electrode Active Material of Example 1>

According to the preparation method according to FIG. 5, unlike the existing gas atomizing method, the substrate is sonicated and cooled at the same time to perform gas atomizing at a relatively lower temperature, thereby preparing a silicon-based active material having a more uniform particle size distribution and relatively small-sized crystal grains.
The silicon raw material was pulverized and heated to liquefy, and then gas atomized. At this time, the substrate was sonicated to form standing waves on the surface in a liquid state so that the particles could be formed to have a more uniform size. In addition, when the silicon particles were crystallized, the crystal grain growth of the particles was suppressed through rapid cooling, and a silicon-based active material satisfying the properties of the size indicated in Table 1 was prepared. Table 1 indicates the properties of Examples 1 to 8 prepared by varying the frequency applied to the sonication of the substrate, the solvent cooling temperature, and the type of cooling solvent.

<Preparation of Negative Electrode Active Material of Comparative Example 1>

The preparation method according to FIG. 6 is a method in which an existing silicon raw material is melted and then gas atomized. For example, a silicon lump, MG-Si, is crushed using physical force, melted, and then gas atomized.
At this time, due to the influence of the surface tension between the liquid and the gas in the gas atomizing process, a silicon-based active material with a smooth surface is formed, but with an overall broad particle size distribution and a relatively large crystal grain size. The properties are indicated in Table 1 below. Table 1 indicates the properties of Comparative Examples 1 to 7 prepared by varying the frequency applied to the sonication of the substrate, the solvent cooling temperature, and the type of cooling solvent.

[Table 1]

| | Crystal grain size (nm) | Span (value of Equation 1) | Cooling solvent | Solvent cooling temperature (°C) | Vibration frequency (khz) |
|---|---|---|---|---|---|
| Example 1 | 251 | 1.96 | Water | 20 | 10 |
| Example 2 | 243 | 1.83 | Water | 20 | 1000 |
| Example 3 | 230 | 1.90 | Water | 10 | 10 |
| Example 4 | 219 | 1.73 | Water | 10 | 1000 |
| Example 5 | 221 | 1.89 | Ethylene glycol | 0 | 10 |
| Example 6 | 207 | 1.64 | Ethylene glycol | 0 | 1000 |
| Example 7 | 183 | 1.86 | Ethylene glycol | -10 | 10 |
| Example 8 | 176 | 1.61 | Ethylene glycol | -10 | 1000 |
| Comparative Example 1 | 280 | 2.53 | - | - | - |
| Comparative Example 2 | 310 | 2.07 | - | - | 10 |
| Comparative Example 3 | 334 | 2.04 | - | - | 1000 |
| Comparative Example 4 | 270 | 2.51 | Water | 20 | - |
| Comparative Example 5 | 256 | 2.44 | Water | 10 | - |
| Comparative Example 6 | 241 | 2.37 | Ethylene glycol | 0 | - |
| Comparative Example 7 | 225 | 2.33 | Ethylene glycol | -10 | - |

<Manufacture of Negative Electrode>

A negative electrode active material including the silicon-based active material, a first conductive material, a second conductive material, and polyacrylamide as a binder were added to distilled water as a solvent for forming the negative electrode slurry in a weight ratio of 80:9.6:0.4:10 to prepare a negative electrode slurry (solid content concentration: 25 wt%).
For example, the first conductive material was plate-shaped graphite (specific surface area: 17 m$^2$/g, average

particle size (D50): 3.5 $\mu$m), and the second conductive material was SWCNT.

As a mixing method, the first material, the second conductive material, binder, and water were dispersed using a homogeneous mixer at 2,500 rpm for 30 minutes, and then the silicon-based active material was added and dispersed at 2,500 rpm for 30 minutes to prepare a negative electrode slurry.

As a negative electrode current collector layer, the negative electrode slurry was coated on both sides of a copper current collector (thickness: 8 $\mu$m) with a loading amount of 85 mg/25 cm$^2$, rolled, and dried in a vacuum oven at 130 °C for 10 hours to form a negative electrode active material layer (thickness: 33 $\mu$m), which was used as a negative electrode (thickness of negative electrode: 41 $\mu$m, porosity of negative electrode: 40.0%).

< Manufacturing of Secondary Battery>

$LiNi_{0.6}Co_{0.2}Mn_{0.2}O_2$ (average particle size (D50): 15 $\mu$m) as a positive electrode active material, carbon black (product name: Super C65, manufacturer: Timcal) as a conductive material, and polyvinylidene fluoride (PVdF) as a binder were added to N-methyl-2-pyrrolidone (NMP) as a solvent for forming a positive electrode slurry at a weight ratio of 97:1.5:1.5 to prepare a positive electrode slurry (solid content concentration: 78 wt%).

The positive electrode slurry was coated on both sides of an aluminum current collector (thickness: 12 $\mu$m) as a positive electrode collector at a loading amount of 537 mg/25 cm$^2$, rolled (roll pressed), and dried in a vacuum oven at 130 °C for 10 hours to form a positive electrode active material layer (thickness: 65 $\mu$m), thereby manufacturing a positive electrode (positive electrode thickness: 77 $\mu$m, porosity 26%).

A lithium secondary battery was manufactured by interposing a polyethylene separator between the positive electrode and each of the negative electrodes of Examples and Comparative Examples and injecting an electrolyte.

The electrolyte was an organic solvent prepared by mixing fluoroethylene carbonate (FEC) and diethyl carbonate (DMC) in a volume ratio of 10:90, adding vinylene carbonate thereto at 3 wt% based on the total weight of the electrolyte, and adding $LiPF_6$ as a lithium salt at a concentration of 1 M.

<Experimental Example>

Experimental Example 1: Cycle Life Data

The secondary batteries including the negative electrodes manufactured in Examples and Comparative Examples were subjected to a life evaluation using an electrochemical charge/discharge test, and the capacity retention rate was evaluated. The secondary batteries were subjected to an in-situ cycle test at 4.2-3.0 V 1 C/0.5 C, and the capacity retention rate was measured by performing a 0.33 C/0.33 C charge/discharge (4.2-3.0 V) every 50 cycles during the test.

Life retention rate (%) = {(discharge capacity at Nth cycle)/(discharge capacity at first cycle)} $\times$ 100

Experimental Example 2: Cycle Resistance Increase Rate

In Experimental Example 1, the capacity retention rate was measured by charging/discharging at 0.33C/0.33C (4.2-3.0V) every 50 cycles during the test, and then the resistance increase rate was compared and analyzed by discharging at 2.5 C pulse at SOC 50 and measuring the total resistance.

For the resistance increase rate measurement evaluation, data at 200 cycles were calculated, and the results were indicated in Table 2 below.

[Table 2]

|  | Life retention rate (%) | Resistance increase rate (%) |
|---|---|---|
| Example 1 | 74.8 | 29 |
| Example 2 | 75.3 | 25 |
| Example 3 | 76.2 | 23 |
| Example 4 | 78.3 | 21 |
| Example 5 | 80.9 | 20 |
| Example 6 | 82.7 | 18 |
| Example 7 | 83.1 | 17 |
| Example 8 | 85.4 | 13 |

(continued)

|  | Life retention rate (%) | Resistance increase rate (%) |
|---|---|---|
| Comparative Example 1 | 61 | 49 |
| Comparative Example 2 | 61.5 | 47 |
| Comparative Example 3 | 61.3 | 46 |
| Comparative Example 4 | 63.4 | 40 |
| Comparative Example 5 | 63.7 | 38 |
| Comparative Example 6 | 64.2 | 35 |
| Comparative Example 7 | 67.3 | 32 |

In the case of the negative electrode active material according to one embodiment of the present disclosure, by forming standing waves within the surface that is atomized through the power of ultrasonication, it is possible to form droplets with a particle size in the range of Equation 1, and by using a low-temperature substrate instead of conventional air, the cooling rate increases, and thus, grain growth is reduced, resulting in a specific range of grain sizes. Accordingly, it has been confirmed that the formation of cracks in the active material due to lithium insertion/de-insertion may be suppressed by reducing the crystal grain size. In addition, the problem of reduced life performance due to uneven charge/discharge within the electrode may be solved by improving the particle size within the range of Equation 1 to ensure that lithium ions are evenly incorporated into the lithium electrode.

Referring to Table 2, it has been confirmed that in terms of adjusting the range of Equation 1, the higher the frequency is formed within a certain range and the lower the temperature is formed within a certain range, the better the performance of the cell in life evaluation and resistance evaluation.

In the case of Comparative Example 1, cooling and sonication vibration were not applied. In the case of Comparative Examples 2 and 3, cooling was not applied. In the case of Comparative Examples 4 to 7, the cooling process was applied but sonication vibration was not applied.

When both sonication vibration and cooling are performed, the crystal grain size according to the present disclosure and the range of Equation 1 are satisfied. In the case of Comparative Examples 1 to 3, it has been confirmed that the crystal grain size is formed larger than those of Examples, and the range of Equation 1 is also formed larger, because the cooling process was not performed. In the case of Comparative Examples 4 to 7, it has been confirmed that the crystal grain size is included in the range of the present disclosure through the cooling process, but the particle size relationship (Equation 1) is not satisfied because the sonication vibration was not performed.

In the case of Comparative Examples 1 to 7, it has been confirmed that lithium ions did not enter the lithium electrode evenly because the crystal grain size and/or the range of Equation 1 are not satisfied, and thus, a problem of reduced life performance occurred due to the uneven charging and discharging within the electrode.

While the technology of the present disclosure has been described with reference to embodiments, it may be appreciated by one skilled in the art of the present disclosure or one having ordinary skill in the art of the present disclosure that various modifications and changes may be made to the various embodiments of the present disclosure without departing from the technical scope of the various embodiments of the present disclosure defined in the claims attached herewith. Therefore, the technical scope of the various embodiments of the present disclosure is not limited to the detailed descriptions of the invention herein, but should be determined by the scope defined in the claims.

**Claims**

1. A negative electrode active material comprising:

    a silicon-based active material having a crystal grain size of 300 nm or less,
    wherein the silicon-based active material has a value of 2.00 or less as defined by Equation 1 below,
    the silicon-based active material includes $SiO_x$ (x=0) and at least one selected from $SiO_x$ (0<x<2), and includes 70 parts by weight or more of the $SiO_x$ (x=0) based on 100 parts by weight of the silicon-based active material:

[Equation 1]

$$(D90-D10)/D50$$

wherein D90, D10, and D50 represent diameters of particles corresponding to 90%, 10%, and 50% by volume in a size distribution, respectively.

2. The negative electrode active material according to claim 1, wherein the crystal grain size of $SiO_x$ (x=0) is 300 nm or less.

3. The negative electrode active material according to claim 1, wherein the silicon-based active material includes a crystal structure having a crystal grain distribution of 1 nm to 300 nm.

4. The negative electrode active material according to claim 1, wherein the average particle diameter (D50) of the silicon-based active material is 1 $\mu$m or more and 9 $\mu$m or less.

5. The negative electrode active material according to claim 1, wherein the crystal grain size of the silicon-based active material is 1 nm or more and 300 nm or less, and
the average particle diameter (D50) of the silicon-based active material is 3 $\mu$m or more and 8 $\mu$m or less.

6. A method of preparing a negative electrode active material, the method comprising:

melting a silicon raw material; and
cooling the melted silicon raw material to form a silicon-based active material,
wherein the cooling includes spraying the melted silicon raw material onto an ultra-vibration low-temperature substrate,
the silicon-based active material has a crystal grain size of 300 nm or less, and
the silicon-based active material has a value of 2.00 or less as defined by Equation 1:

[Equation 1]

$$(D90-D10)/D50$$

wherein D90, D10, and D50 represent diameters of particles corresponding to 90%, 10%, and 50% by volume in a size distribution, respectively.

7. The method according to claim 6, wherein the ultra-vibration low-temperature substrate has a vibration frequency of 1 kHz or more and 1500 kHz or less.

8. The method according to claim 6, wherein a cooling temperature in the cooling is 20 °C or less.

9. A negative electrode composition comprising:

the negative electrode active material according to anyone of claims 1 to 5;
a negative electrode conductive material; and
negative electrode binder.

10. The negative electrode composition according to claim 9, wherein a content of the negative electrode active material is at least 40 parts by weight based on 100 parts by weight of the negative electrode composition.

11. The negative electrode composition according to claim 9, wherein the negative electrode conductive material includes a surface-type conductive material and a line-type conductive material.

12. The negative electrode composition according to claim 11, wherein the negative conductive material includes 80 parts by weight or more and 99.9 parts by weight or less of the surface-type conductive material and 0.1 parts by weight or more and 20 parts by weight or less of the line-type conductive material based on 100 parts by weight of the negative conductive material.

13. The negative electrode composition according to claim 9, wherein a content of the negative electrode conductive material is 40 parts by weight or less based on 100 parts by weight of the negative electrode composition.

14. A negative electrode for a lithium secondary battery, comprising:

a negative electrode current collector layer, and
a negative electrode active material layer provided on one or both sides of the negative electrode current collector layer,
wherein the negative electrode active material layer includes the negative electrode composition according to claim 9 or a cured product thereof.

15. The negative electrode for a lithium secondary battery, according to claim 14, wherein a thickness of the negative electrode current collector layer is 1 μm or more and 100 μm or less, and
a thickness of the negative electrode active material layer is 5 μm or more and 500 μm or less.

16. A lithium secondary battery comprising:

a positive electrode;
the negative electrode for a lithium secondary battery according to claim 14;
a separator provided between the positive electrode and the negative electrode; and
an electrolyte.

## FIG. 1

## FIG. 2

**FIG. 3**

**FIG. 4**

**FIG. 5**

## FIG. 6

Melted silicon

Inert Gas

High crystal size

## FIG. 7

particle

grain

d
lattice
spacing

length
L

column
length
D

particle
size

crystal
grain size

## INTERNATIONAL SEARCH REPORT

| | International application No. |
|---|---|
| | **PCT/KR2025/001407** |

| **A.** | **CLASSIFICATION OF SUBJECT MATTER** |
|---|---|

**H01M 4/38**(2006.01)i; **H01M 4/48**(2010.01)i; **H01M 4/134**(2010.01)i; **H01M 4/62**(2006.01)i; **H01M 10/052**(2010.01)i; **C01B 33/113**(2006.01)i; **C01B 33/18**(2006.01)i

According to International Patent Classification (IPC) or to both national classification and IPC

| **B.** | **FIELDS SEARCHED** |
|---|---|

Minimum documentation searched (classification system followed by classification symbols)

H01M 4/38(2006.01); H01M 10/052(2010.01); H01M 10/0525(2010.01); H01M 4/04(2006.01); H01M 4/134(2010.01); H01M 4/48(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 실리콘 (silicon), 결정립 (grain), 음극 (anode), 입자 크기 (particle size), 입자크기 분포도 (particle-size distribution), 평균입경 (median diameter)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| Y | KR 10-2024-0009896 A (LG ENERGY SOLUTION, LTD.) 23 January 2024 (2024-01-23) See abstract; paragraphs [0073], [0087] and [0165]; and claims 1, 8, 9 and 11-13. | 1-16 |
| Y | KR 10-2023-0088413 A (BTR NEW MATERIAL GROUP CO., LTD. et al.) 19 June 2023 (2023-06-19) See abstract; paragraphs [0176], [0468], [0479], [0518]-[0524] and [0569], and table 2. | 1-16 |
| A | KR 10-2023-0091016 A (LG ENERGY SOLUTION, LTD.) 22 June 2023 (2023-06-22) See abstract; and claims 1-16. | 1-16 |
| A | KR 10-2011-0128739 A (SHIN-ETSU CHEMICAL CO., LTD.) 30 November 2011 (2011-11-30) See abstract; and claims 1-15. | 1-16 |
| A | JP 2008-181708 A (MATSUSHITA ELECTRIC IND. CO., LTD.) 07 August 2008 (2008-08-07) See abstract; and claims 1-6. | 1-16 |

☐ Further documents are listed in the continuation of Box C.     ☑ See patent family annex.

| | Special categories of cited documents: | | |
|---|---|---|---|
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 May 2025** | **07 May 2025** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2025/001407**

| Patent document cited in search report | | | Publication date (day/month/year) | Patent family member(s) | | | Publication date (day/month/year) |
|---|---|---|---|---|---|---|---|
| KR | 10-2024-0009896 | A | 23 January 2024 | CN | 118591905 | A | 03 September 2024 |
| | | | | EP | 4462505 | A1 | 13 November 2024 |
| | | | | JP | 2025-506415 | A | 11 March 2025 |
| | | | | KR | 10-2693645 | B1 | 12 August 2024 |
| | | | | WO | 2024-014897 | A1 | 18 January 2024 |
| KR | 10-2023-0088413 | A | 19 June 2023 | CN | 115528237 | A | 27 December 2022 |
| | | | | EP | 4231379 | A1 | 23 August 2023 |
| | | | | JP | 2023-548928 | A | 21 November 2023 |
| | | | | JP | 7606198 | B2 | 25 December 2024 |
| | | | | US | 2024-0021819 | A1 | 18 January 2024 |
| | | | | WO | 2022-268165 | A1 | 29 December 2022 |
| KR | 10-2023-0091016 | A | 22 June 2023 | CN | 117015868 | A | 07 November 2023 |
| | | | | EP | 4293747 | A1 | 20 December 2023 |
| | | | | JP | 2024-508143 | A | 22 February 2024 |
| | | | | JP | 7575171 | B2 | 29 October 2024 |
| | | | | KR | 10-2606420 | B1 | 29 November 2023 |
| | | | | US | 2023-0197961 | A1 | 22 June 2023 |
| | | | | WO | 2023-113330 | A1 | 22 June 2023 |
| KR | 10-2011-0128739 | A | 30 November 2011 | CN | 102263242 | A | 30 November 2011 |
| | | | | CN | 102263242 | B | 16 March 2016 |
| | | | | JP | 2012-009421 | A | 12 January 2012 |
| | | | | JP | 5666378 | B2 | 12 February 2015 |
| | | | | KR | 10-1803568 | B1 | 30 November 2017 |
| | | | | US | 2011-0287317 | A1 | 24 November 2011 |
| | | | | US | 2015-0221931 | A1 | 06 August 2015 |
| | | | | US | 9099717 | B2 | 04 August 2015 |
| | | | | US | 9537142 | B2 | 03 January 2017 |
| JP | 2008-181708 | A | 07 August 2008 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240016628